# EUROPÄISCHE PATENTSCHRIFT

(11) **EP 0 850 121 B1**
(45) Veröffentlichungstag und Bekanntmachung des Hinweises auf die Patenterteilung: **03.05.2000**
(21) Anmeldenummer: 97927002.2
(22) Anmeldetag: 12.06.1997
(51) Int. Cl.: B23H 9/06, B23H 3/00, B23H 9/00

(54) **VORRICHTUNG ZUM ELEKTROCHEMISCHEN BEARBEITEN VON AUSNEHMUNGEN**
DEVICE FOR ELECTROCHEMICALLY MACHINING RECESSES
DISPOSITIF D'USINAGE ELECTROCHIMIQUE D'EVIDEMENTS

(30) Priorität: 09.07.1996 DE 19627567
(43) Veröffentlichungstag der Anmeldung: 01.07.1998
(73) Patentinhaber: ROBERT BOSCH GMBH, 70442 Stuttgart (DE)
(72) Erfinder: ZIEGLER, Gerhard, D-70435 Stuttgart (DE); ANGERMAIER, Hans, D-75428 Illingen (DE)
(86) Internationale Anmeldenummer: DE9701189
(87) Internationale Veröffentlichungsnummer: WO9801255

(56) Entgegenhaltungen:
- US-A- 3 647 671
- US-A- 3 769 194

## Beschreibung

### Stand der Technik

Die Erfindung betrifft eine Vorrichtung zum elektrochemischen Bearbeiten von Ausnehmungen an der Innenseite von Bohrungen von Bauteilen entsprechend dem Anspruch 1. Bei bisher bekannten Vorrichtungen wird die Elektrolytlösung in eine Zuführbohrung der Elektrode zugeführt und am Bearbeitungsteil der Elektrode vorbeigeführt. Die Elektrolytlösung strömt über eine fluchtend zur Zuführbohrung ausgeführten Ablaufbohrung zurück. Dadurch ist die Elektrode relativ lang und somit nur beschränkt einsetzbar.

Ferner ist aus der US-A-3 769 194 eine Vorrichtung zum elektrochemischen Bearbeiten von Ausnehmungen bekannt, wobei auf einem Träger eine Scheibe angeordnet ist, an der eine Elektrolytlösung vorbeiströmt. Mit der einen Scheibe kann in einem Arbeitsgang nur eine Kontur hergestellt werden. Sind mehr Konturen erforderlich, so muß dies in zwei Arbeitsgängen mit zwei verschiedenen Vorrichtungen erfolgen.

Der Erfindung liegt die Aufgabe zugrunde, eine Vorrichtung zum elektrochemischen Bearbeiten platzsparend auszubilden.

### Vorteile der Erfindung

Die erfindungsgemäße Vorrichtung zum elektrochemischen Bearbeiten von Ausnehmungen mit den Merkmalen des Anspruchs 1 hat den Vorteil, daß eine relativ platzsparende Ausbildung der Elektrode möglich ist. In einfacher Weise sind zwei Bearbeitungsstellen in Achsrichtung hintereinander anordenbar. Dadurch können gleichzeitig, d. h. in einem Arbeitsgang zwei Konturen hergestellt werden. Dadurch ist es insbesondere in der Großserienfertigung möglich, schnell und bei hoher Qualität auch detaillierte Konturen herzustellen. Insbesondere durch die Abstimmung der Form der Elektrode und der Größe des Arbeitsspalts zwischen der Elektrode und dem Werkstück sind Konturen mit uneinheitlicher Tiefe und Form herstellbar.

Durch die in den Unteransprüchen aufgeführten Maßnahmen sind vorteilhafte Weiterbildungen und Verbesserungen der im Hauptanspruch angegebenen Vorrichtung möglich.

### Zeichnung

Ein Ausführungsbeispiel der Erfindung ist in der Zeichnung dargestellt und in der nachfolgenden Beschreibung näher erläutert. In der Figur 1 ist ein Längsschnitt durch eine Elektrode, in den Figuren 2 und 3 eine vergrößerte Detaildarstellung der ersten und zweiten Bearbeitungsstelle, in der Figur 4 eine Bearbeitungsstelle bei angeordnetem Bauteil und in der Figur 5 eine Kathodenscheibe dargestellt.

### Beschreibung des Ausführungsbeispiels

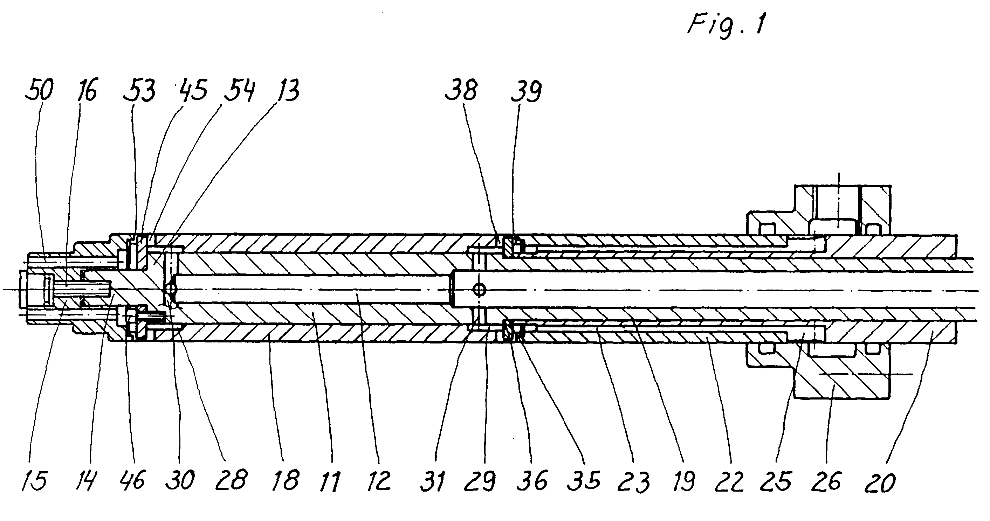

In der Figur 1 ist mit 10 eine Elektrode bezeichnet, deren Träger 11 aus elektrisch leitendem Material, z. B. Messing besteht und als Kathode für ein elektrochemisches Bearbeitungsverfahren dient. Der Träger 11 weist eine mittige Sacklochbohrung 12 auf, die als Zulauf für die Elektrolytlösung dient. Am Träger 11 ist am Boden 13 der Sacklochbohrung 12 ein Fortsatz 14 ausgebildet, auf den ein Führungsteil 15 aufgesetzt und mit Hilfe einer Schraube 16 befestigt ist. Ferner ist auf dem Träger 11 eine erste Schutzhülse 18 aufgesetzt, die an der Außenseite des Trägers 11 anliegt. Anschließend an die Schutzhülse 18 liegt in Achsrichtung der Elektrode 10 gesehen an der Außenseite des Trägers 11 eine Buchse 19 aus Messing oder einem anderen elektrisch leitenden Material an. Die Buchse 19 weist an der dem Führungsteil 15 abgewandten Ende einen Bund 20 zur Befestigung der Elektrode 10 auf einem nicht dargestellten Bodenteil einer Bearbeitungsanlage auf. Über das Bodenteil ist die Elektrode mit einem Stromanschluß verbunden. Ferner wird über das Bodenteil auch die Elektrolytlösung der Sacklochbohrung 12 zugeführt. Über der Buchse 19 ist eine zweite Schutzhülse 22 so gestülpt, daß zwischen der Buchse 19 und der Schutzhülse 22 ein umlaufender Kanal 23 entsteht. Ferner reicht die Schutzhülse 22 in axialer Richtung der Elektrode 10 gesehen nicht bis zum Bund 20 der Buchse 19, so daß zwischen dem Bund 20 und der Schutzhülse 22 eine Ausnehmung 25 entsteht. Diese Ausnehmung 25 ist mit dem Kanal 23 in Verbindung und wird von einem Abdeckteil 26 umgriffen. Beide Schutzhülsen 18 und 22 und das Führungsteil 15 sind aus elektrisch nicht leitendem Material, z. B. elektrisch isolierender Kunststoff hergestellt.

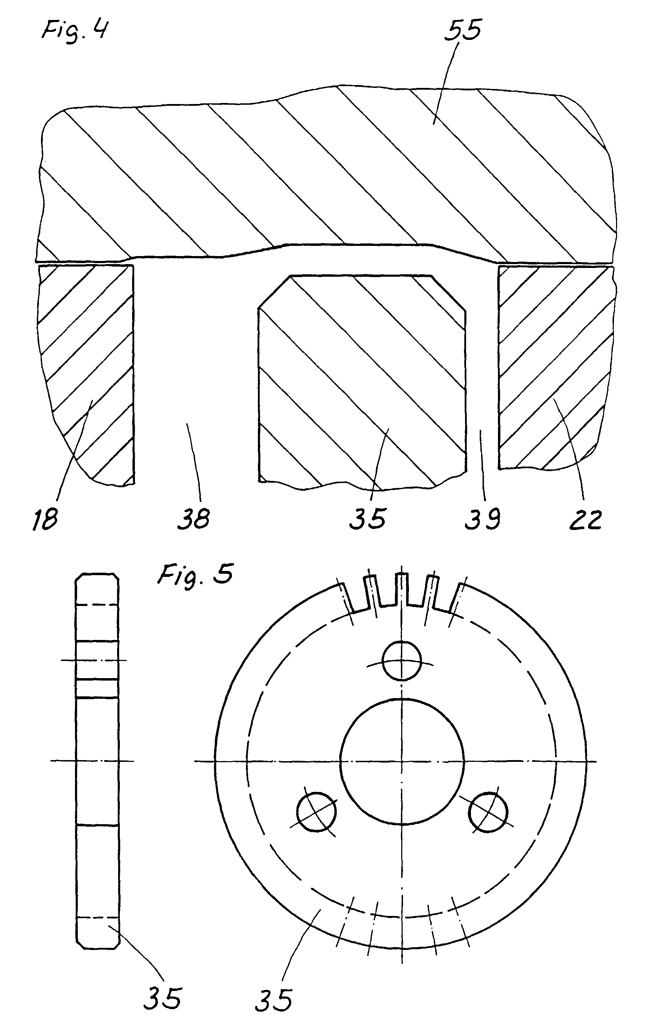

An beiden Enden der Schutzhülse 18 ist auf der dem Träger 11 zugewandten Innenseite jeweils eine umlaufende Ringnut 28, 29 ausgebildet. Jede Ringnut 28, 29 ist mit Hilfe einer im Träger 11 ausgebildeten Querbohrung 30, 31 mit der Sacklochbohrung 12 verbunden. Ferner weist die Sacklochbohrung 12 von der Öffnung bis kurz über die Querbohrung 31 hinaus einen größeren Durchmesser als im Bereich bis zum Boden 13 hin auf. Zwischen den Enden der beiden Schutzhülsen 18, 22 ist eine Kathodenscheibe 35 aus elektrisch leitendem Material angeordnet, die auf dem Träger 11 aufsitzt und mit Hilfe des Führungsteils 19 an eine am Träger 11 ausgebildete Schulter 36 angedrückt wird. Die Kathodenscheibe 35 kann abhängig von der gewünschten Tiefe der Kontur im zu bearbeitenden Bauteil bis bündig mit den Außenseiten der Schutzhülsen 18 bzw. 22 abschließend reichen. Gewöhnlich ist aber der Radius der Kathodenscheibe 35 geringer als der Außenradius der Schutzhülsen 18 bzw. 22. Wie aus der Figur 5 ersichtlich ist, hat die Kathodenscheibe die Form eines Zahnrades, wobei durch die Form und Größe der Zähne bzw. der Zahnlücken die gewünschte Kontur im zu bearbeitenden Bauteil bestimmt wird.

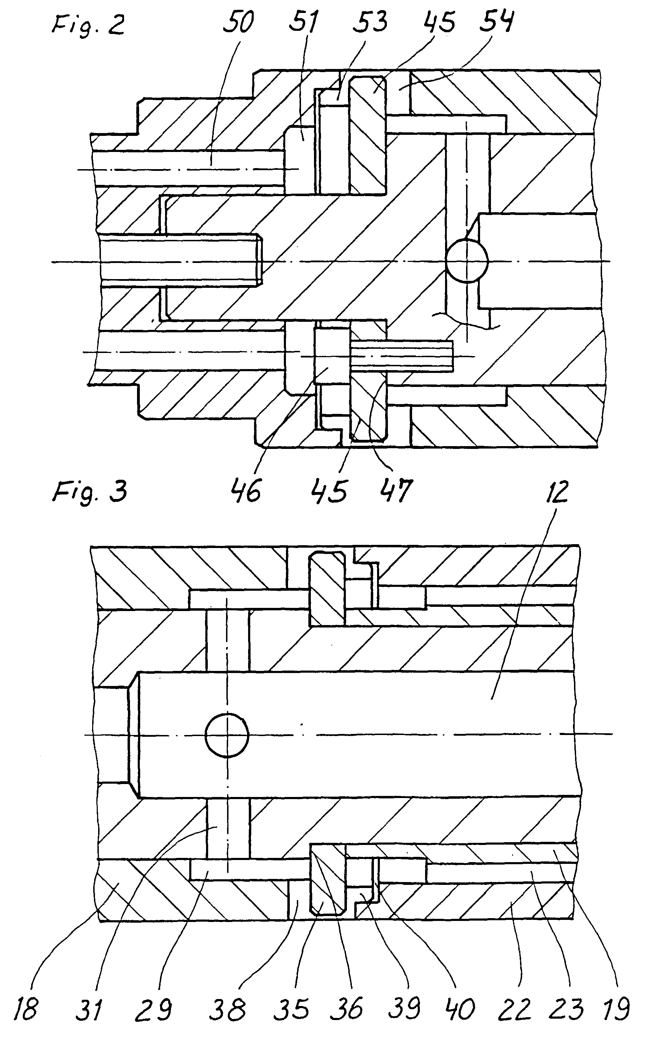

Wie aus der Figur 2 näher zu erkennen ist, befindet sich zwischen der Kathodenscheibe 35 und der ersten Schutzhülse 18 ein erster Arbeitsspalt 38 und zwischen der Kathodenscheibe 35 und der zweiten Schutzhülse 22 ein zweiter Spalt 39. Somit ist ein Fluß der Elektrolytlösung von der als Zulauf dienenden Sacklochbohrung 12 durch die Querbohrung 31, die Ausnehmung 29, den ersten Spalt 38 vorbei an der Umfangsseite der Kathodenscheibe 35, den zweiten Spalt 39, eine Vertiefung 40 in der Stirnseite der Schutzhülse 22 und dem Kanal 23 zum Rückfluß möglich.

Eine zweite Kathodenscheibe 45, die wie die Kathodenscheibe 35 ausgebildet ist, ist auf den Fortsatz 14 des Führungsteils 15 aufgesetzt und mit Hilfe dreier Schrauben 46 an der Schulter 47 anliegend am Führungsteil 15 befestigt. Auch der Radius der zweiten Kathodenscheibe 45 ist geringer als der Radius der ersten Schutzhülse 18 bzw. der Radius des Führungsteils 15 ausgebildet. Im Führungsteil 15 ist eine durchgehende Ringnut 50 vorhanden, die auf der dem Träger 11 zugewandten Seite in eine mehrfach abgesetzte Ausnehmung 51 mündet. Zwischen der Kathodenscheibe 45 und dem Führungsteil 15 ist ein dritter Spalt 53, und zwischen der Kathodenscheibe 45 und der Schutzhülse 18 ist ein vierter Spalt 54 vorhanden. Somit ist ein Fluß der Elektrolytlösung von der Sacklochbohrung 12 durch die Querbohrung 30 in die Ausnehmung 28, den vierten Spalt 54, vorbei am Bauteil bzw. Außenumfang der zweiten Kathodenscheibe 45, dem dritten Spalt 53, durch die Ausnehmung 51 und der als Rückfluß dienenden Ringnut 50 möglich.

In der Figur 4 ist die Abstimmung der Form der Kathodenscheibe 45 bzw. 35 und die Größe des ersten 38 und zweiten Spalts 30 bei einer bestimmten im Bauteil gewünschten Kontur erläutert. Aus der Figur 4 ist erkennbar, daß die Kathodenscheiben zueinander verlaufende Stirnseiten, einen parallel zur Achse verlaufenden Umfang und abgekantete Übergänge aufweist. Bei dem elektrochemischen Verfahren wird berührungslos Material von dem zu bearbeitenden Bauteil abgetragen. Dabei werden die Bauteile weder mechanisch noch thermisch beansprucht. Somit treten keinerlei Veränderungen der physikalischen und chemischen Eigenschaften der verwendeten Werkstoffe für das Bauteil auf. Die Abtragung erfolgt nach dem Gesetz von Faraday, wonach die Abtragungsmenge proportional dem Produkt aus der Stromstärke und der Einwirkzeit ist.

Das Prinzip des elektrochemischen Verfahrens beruht darauf, daß an zwei Elektroden, welche sich in einer wässrigen Elektrolytlösung befinden, eine Gleichspannung angelegt wird. Dazu wird das zu behandelnde Bauteil, in dem eine gewünschte Kontur eingebracht werden soll, mit Hilfe eines Übertragungselements mit dem Pluspol (Anode) der Stromquelle verbunden, während, wie bereits oben erwähnt, die Elektrode, d. h. der Träger 11 aufgrund seiner elektrisch leitenden Eigenschaften mit dem Minuspol (Kathode) der Stromquelle verbunden wird. Die Zusammensetzung der Elektrolytlösung ist selbstverständlich abhängig vom Material des zu bearbeitenden Bauteils. Bei Metallen z. B. wird eine Kochsalzlösung oder eine Natriumnitratlösung gewählt. Der elektrochemische Prozeß an sich ist aus der Physik bekannt und somit hier nicht näher erläutert. Selbstverständlich ist die Arbeitsweise neben der Zusammensetzung der Elektrolytlösung auch von der verwendeten Stromstärke bestimmt, die wiederum auf das Material des zu bearbeitenden Bauteils abzustimmen ist. Wird z. B. als Material des Bauteils eine Aluminium-Gußlegierung mit z. B. 8 Gewichtsprozent Silizium verwendet, so müssen die elektrisch nicht leitenden Siliziumkristalle mit einem hohen Elektrolytdruck von z. B. 6 - 8 bar und einer Gleichstromspannung von etwa 15 V herausgelöst werden.

Durch Steuerung der Größe der Arbeitsspalte kann nun die Tiefe der im Bauteil 55 zu bildenden Kontur gesteuert werden. Im Unterschied zur bisherigen Vorgehensweise kann auch eine uneinheitliche Kontur im Bauteil 55 erzeugt werden. Je größer der jeweilige Spalt ist, desto geringer ist die Tiefe des jeweils zugeordneten Bereichs der Kontur.

Durch die parallele Rückführung der an der ersten Bearbeitungsstelle, d. h. an der ersten Kathodenscheibe 35 benötigten Menge an Elektrolytlösung ist es möglich, mehrere Bearbeitungsstellen, d. h. eine Kathodenscheibe 35 und eine Kathodenscheibe 45 hintereinander anzuordnen und somit gleichzeitig und in einem einzigen Arbeitsgang zwei Bearbeitungsvorgänge zu ermöglichen. Dadurch ist eine wirtschaftliche Herstellungsweise möglich.

## Patentansprüche

1. Vorrichtung (10) zum elektrochemischen Bearbeiten von Ausnehmungen im Innern von Bauteilen (55) aus elektrisch leitenden Materialien, wobei auf einem Träger (11) aus elektrisch leitendem Material mindestens eine Scheibe (35, 45) angeordnet ist, an der eine Elektrolytlösung vorbeiströmt, dadurch gekennzeichnet, daß die Elektrolytlösung entgegen der Zulaufrichtung zwischen wenigstens einer ersten Scheibe (35) und dem Bauteil (55) zu einem Rückfluß, der durch einen Kanal (23) gebildet wird, geführt wird.

2. Vorrichtung nach Anspruch 1, dadurch gekennzeichnet, daß der den Rückfluß bildende Kanal (23) parallel zu der den Zufluß bildenden Bohrung (12) im Träger (11) verläuft.

3. Vorrichtung nach Anspruch 1 und/oder 2, dadurch gekennzeichnet, daß der Kanal (23) als zwischen dem Träger (11) und einer aus elektrisch nicht leitendem Material bestehenden Schutzhülse (22) gebildeten Spalt ausgebildet ist.

4. Vorrichtung nach einem der Ansprüche 1 bis 3, dadurch gekennzeichnet, daß eine erste (35) und eine zweite (45) Scheibe vorhanden ist.

5. Vorrichtung nach Anspruch 4, dadurch gekennzeichnet, daß die beiden Scheiben (35, 45) in Achsrichtung der Vorrichtung (10) gesehen hintereinander angeordnet sind.

6. Vorrichtung nach Anspruche 4 oder 5, dadurch gekennzeichnet, daß die Elektrolytlösung in Zuflußrichtung zwischen der zweiten Scheibe (45) und dem Bauteil (55) zu einem Rückfluß (50) geführt wird.

7. Vorrichtung nach einem der Ansprüche 1 bis 6, dadurch gekennzeichnet, daß auf dem Träger (11) mindestens ein erstes (18) und ein zweites (22) Schutzteil aus elektrisch nicht leitendem Material vorhanden ist.

8. Vorrichtung nach einem der Ansprüche 1 bis 7, dadurch gekennzeichnet, daß der Abstand zwischen der ersten (35) oder der zweiten (45) Scheibe und dem jeweils zugeordneten Schutzteil (18, 22) unterschiedlich groß ist.

9. Vorrichtung nach einem der Ansprüche 4 bis 8, dadurch gekennzeichnet, daß die den Zufluß bildende Bohrung (12) im Bereich zwischen den beiden Scheiben (34, 35) einen geringeren Durchmesser als im übrigen Bereich aufweist.

## Claims

1. Device (10) for electrochemically machining recesses in the interior of components (55) made from electrically conductive material, in which device at least one disc (35, 45), past which an electrolyte solution flows, is arranged on a support (11) made from electrically conductive material, characterized in that the electrolyte solution is guided counter to the feed direction between at least a first disc (35) and the component (55) to a backflow which is formed by a channel (23).

2. Device according to Claim 1, characterized in that the channel (23) which forms the backflow runs parallel to the hole (12) in the support (11) which forms the inflow.

3. Device according to Claim 1 and/or 2, characterized in that the channel (23) is designed as a gap which is formed between the support (11) and a protective sleeve (22) which consists of material which is not electrically conductive.

4. Device according to one of Claims 1 to 3, characterized in that there are a first disc (35) and a second disc (45) .

5. Device according to Claim 4, characterized in that the two discs (35, 45) are arranged one behind the other, as seen in the axial direction of the device (10) .

6. Device according to Claim 4 or 5, characterized in that the electrolyte solution is guided in the inflow direction between the second disc (45) and the component (55) to a backflow (50).

7. Device according to one of Claims 1 to 6, characterized in that at least a first protective part (18) and a second protective part (22) made from material which is not electrically conductive are present on the support (11).

8. Device according to one of Claims 1 to 7, characterized in that the distance between the first disc (35) or the second disc (45) and the respectively associated protective parts (18, 22) differs in size.

9. Device according to one of Claims 4 to 8, characterized in that the hole (12) which forms the inflow has a smaller diameter in the area between the two discs (34, 45) than in the remaining area.

## Revendications

1. Dispositif (10) pour le traitement électrochimique d'évidements à l'intérieur de pièces de construction (55) en matières électriquement conductrices, dans le quel on dispose sur un support (11) en une matière électriquement conductrice au moins un disque (35, 45), sur lequel on fait passer une solution électrolytique,
caractérisé en ce que
on dirige la solution électrolytique en sens opposé au sens d'alimentation entre au moins un premier disque (35) et la pièce de construction (55) en direction d'un écoulement de retour, qui est formé à travers un canal (23).

2. Dispositif selon la revendication 1,
caractérisé en ce que
le canal (23) formant l'écoulement de retour, s'étend parallèlement à l'alésage (12) dans le support (11) qui forme l'écoulement d'arrivée.

3. Dispositif selon la revendication 1 ou 2,
caractérisé en ce que
le canal (23) est constitué sous la forme d'une fente formée entre le support (11) et une douille de protection (22) réalisée en une matière électriquement non conductrice.

4. Dispositif selon l'une des revendications 1 à 3,
caractérisé en ce que
il y a un premier disque (35) et un deuxième disque (45).

5. Dispositif selon la revendication 4,
caractérisé en ce que
les deux disques (35, 45) sont disposés, vus dans le sens axial du dispositif (10), l'un derrière l'autre.

6. Dispositif selon la revendication 4 ou 5,
caractérisé en ce que
on fait passer la solution électrolytique dans le sens de l'arrivée entre le deuxième disque (45) et la pièce de construction (55) vers un écoulement de retour (50).

7. Dispositif selon l'une des revendications 1 à 6,
caractérisé en ce qu'
on dispose sur le support (11) à au moins une première pièce de protection (18) et une deuxième pièce de protection (22) en une matière électriquement non conductrice.

8. Dispositif selon l'une des revendications 1 à 7,
caractérisé en ce que
la distance entre le premier disque (35) ou le deuxième disque (45) et la pièce de protection (18, 22) respectivement associée a une dimension différente.

9. Dispositif selon l'une des revendications 4 à 8,
caractérisé en ce que
l'alésage (12) qui forme l'arrivée dans la zone comprise entre les deux disques (34, 35) présente un diamètre plus faible que dans la zone restante.
